# EUROPÄISCHE PATENTSCHRIFT

(11) **EP 1 800 928 B1**
(45) Veröffentlichungstag und Bekanntmachung des Hinweises auf die Patenterteilung: **05.03.2008**
(21) Anmeldenummer: 07002578.8
(22) Anmeldetag: 15.11.2005
(51) Int. Cl.: B60J 7/20

(54) **Mehrteiliges Dach für Fahrzeuge mit offenem Aufbau**
Multi-part roof for vehicles with open superstructure
Toit à plusieurs parties pour véhicules dotés d'une construction ouverte

(30) Priorität: 30.12.2004 DE 102004063781
(43) Veröffentlichungstag der Anmeldung: 27.06.2007
(62) Teilanmeldung aus: 05024956.4
(73) Patentinhaber: CTS Fahrzeug-Dachsysteme GmbH, 74321 Bietigheim-Bissingen (DE)
(72) Erfinder: Papendorf, Markus, 74354 Besigheim (DE); Bruder, Gernot, Dr., 76131 Karlsruhe (DE); Röder, Holger, 73054 Eislingen (DE)
(74) Vertreter: Wittner, Walter

(56) Entgegenhaltungen:
- DE-A1- 10 117 767
- FR-A- 2 834 949

## Beschreibung

Die Erfindung betrifft ein mehrteiliges Dach für Fahrzeuge mit offenem Aufbau.

Mehrteilige Dächer für Fahrzeuge sind in vielfältigen Ausgestaltungen bekannt, wobei aus Sicht des Nutzers meist nur zwischen Hardtops, also Hartschalendächern, oder Softtops im Sinne von Faltdächern mit flexiblem Verdeckbezug gesprochen wird. Es gibt aber auch viele Mischformen, so beispielsweise Dächer, die lediglich bereichsweise eine formsteife oder eine flexible Dachhaut aufweisen, oder Dächer, bei denen ein flexibler Verdeckbezug teilweise in Überdeckung zu einer formsteifen Dachschale vorgesehen ist.

Bei beiden Dachformen, Hardtops und Softtops, ist es üblich, bei geöffnetem Aufbau die Dächer zusammengefaltet oder zusammengelegt in einem rückseitig zum Insassenraum des Fahrzeuges vorgesehenen Ablageraum unterzubringen, der separiert zum Kofferraum vorgesehen sein oder einen Bestandteil des Kofferraums bilden kann und dem eine dem Kofferraumdeckel vorgelagerte Abdeckung, als Hutablage bezeichnet, zugeordnet ist. Zum Öffnen und Schließen des Daches ist die Hutablage in eine den Zugang zum Ablageraum freigebende Öffnungsstellung verstellbar. Bei geschlossenem Dach liegt die Hutablage innerhalb des Daches und üblicherweise um einen Durchtrittsspalt für das Dach beanstandet zum Kofferraumdeckel. Bei geöffnetem Dach grenzt die Hutablage meist an den Kofferraumdeckel an.

Ein mehrteiliges Dach für Fahrzeuge mit offenem Aufbau der eingangs genannten Art ist aus der DE 101 17 767 A1 bekannt und es ist hier dem zweiteiligen Dach eine Dachkinematik zugeordnet, über die das Dach in geöffnetem Zustand in einem Ablageraum unterzubringen ist, dem als im Verstellweg für die Dachteile beim Öffnen und Schließen des Daches liegend eine Hubablage als Abdeckung zugeordnet ist. Die Hutablage ist über eine Lenkerkinematik in Form einer Mehrgelenkanordnung verstellbar, die als Gelenkkette aus drei Mehrgelenk-Mechanismen aufgebaut ist. Diese weisen jeweils zwei karosseriefeste Drehpunkte als Anlenkpunkte auf, wobei jeweils ein gemeinsamer karosseriefester Drehpunkt zwei aufeinander folgenden Mehrgelenk-Mechanismen zugeordnet ist und wobei in der Gelenkkette jeweils zwei aufeinander folgenden Mehrgelenk-Mechanismen ein gemeinsamer Hebel zugeordnet ist. Die Mehrgelenk-Mechanismen sind als Vier- bzw. Fünfgelenk-Mechanismen ausgebildet. Die Mehrgelenkanordnung weist eine Antriebsverbindung zu einem der Lenker der Dachkinematik auf, wobei durch die Gestaltung der Gelenkkette die Verstellung der Hutablage überlagert zur Verstellung der Dachkinematik bzw. des Daches erfolgt, und zwar derart, dass die Verstellung der Hutablage während der Verstellung des Daches erfolgt. Die Verstellung der Hutablage ist somit spätestens mit Erreichen der Endstellungen des Daches abgeschlossen. Erreicht werden sollen hierdurch insbesondere günstige Steuerzeiten, das heißt es soll der Schließ- bzw. Öffnungsvorgang des Daches in möglichst kurzer Zeit erfolgen.

Eine unabhängige und separate Verstellung der Hutablage wird bei einer weiteren, aus der FR-A 2 834 949 bekannten Lösung angestrebt, bei der die Hutablage in einen vorderen, um eine Fahrzeugquerachse schwenkbaren Abdeckungsteil und einen hinteren Abdeckungsteil aufgeteilt ist, der über eine Viergelenkanordnung in Längsrichtung des Fahrzeuges verschwenkbar abgestützt ist. Die Unterteilung der Hutablage in einen vorderen und einen hinteren Abdeckungsteil macht es möglich, die Gesamtlänge der Hutablage durch den Grad der Überdeckung zwischen den Abdeckungsteilen zu variieren, so dass der bei geschlossenem Dach erforderliche Durchtrittsspalt zwischen Hutablage und heckseitig folgendem Kofferraumdeckel unter Verkürzung der Überdeckung zwischen den Abdeckungsteilen bei geöffnetem Dach geschlossen werden kann.

Durch die Erfindung soll für ein mehrteiliges Dach gemäß dem Oberbegriff des Anspruches 1 eine besonders zweckmäßige Ansteuerung einer den Zugang zum Ablageraum für das Verdeck teilweise überdeckenden Hutablage ermöglicht werden.

Gemäß der Erfindung wird dies mit den Merkmalen des Anspruches 1 erreicht.

Die Erfindung macht für das zu öffnende Dach und für die Hutablage unter Kopplung an den Bewegungsablauf der Dachkinematik einen Betriebsablauf möglich, bei dem die Hutablage ausgehend von ihrer Betriebsstellung bei geschlossenem Dach in eine Öffnungsstellung verschwenkt wird, in der der Zugang zum Ablageraum für das abzulegende Dach freigegeben und offengehalten ist, bis das Dach seine Ablagestellung erreicht hat, und dementsprechend auch die Dachkinematik eine entsprechende Endstellung. Ausgehend von dieser Endstellung wird die Lenkerkinematik der Hutablage über einen eigenständigen Stellantrieb, der gegen die Dachkinematik abgestützt ist, in ihre Betriebsstellung bei abgelegtem Dach verschwenkt.

Entsprechend ist der Ablauf beim Schließen des Daches. Hierzu wird zunächst die Hutablage über ihren Stellantrieb geöffnet und gegenüber der Dachkinematik in die der Ausgangsstellung bei der Betätigung ihres Stellantriebes gegebene Lage über den Stellantrieb verstellt. Danach erfolgt, ohne Betätigung des Stellantriebes der Hutablage, die Verlagerung der Hutablage synchronisiert zur Verlagerung des Daches, wobei die Hutablage bei geschlossenem Dach ihre entsprechende, an die innere Dachkontur angrenzende und den Ablageraum des Daches überdeckende Betriebsstellung erreicht. Gegenüber dieser Betriebsstellung entspricht die über den Stellantrieb erreichte Betriebsstellung bei Ablagestellung des Daches einer nach hinten verlagerten Betriebsstellung der Hutablage.

Weitere Einzelheiten und Merkmale der Erfindung ergeben sich aus den Ansprüchen und der nachfolgenden Zeichnungsbeschreibung. Es zeigen:
- Fig. 1: die Dachkinematik eines dreiteiligen Hardtops für Fahrzeuge mit offenem Aufbau in der der Schließstellung des Daches entsprechenden Lage, wobei die in spiegelbildlicher Anordnung den beiden Längsseiten des Fahrzeuges zugeordnete Kinematik in einer schematisierten Darstellung veranschaulicht ist, zunächst unter Verzicht auf die Darstellung der für die Verstellung einer Heckscheibe sowie einer Hutablage dienenden Kinematikteile, in einer Gesamtdarstellung,
- Fig. 2: eine der Fig. 1 entsprechende Stellung der Dachkinematik in vergrößerter und aufgelöster Darstellung,
- Fig. 3: die Dachkinematik gemäß Fig. 1 und 2 in einer Zwischenstellung zwischen Schließ- und Ablagestellung des Daches, wiederum aufgelöst dargestellt,

- Fig. 4: die Dachkinematik gemäß Fig. 1 bis 3 in Ablagestellung des Daches,
- Fig. 5: in einer der Fig. 2 entsprechenden aufgelösten Darstellung die Dachkinematik gemäß Fig. 1 bis 4, ergänzt um die Kinematikteile für die Heckscheibe und die Hutablage, wobei Fig. 5 wiederum die Schließstellung des Daches zeigt,
- Fig. 6: in einer der Fig. 3 entsprechenden Zwischenstellung des Daches die ergänzte Dachkinematik gemäß Fig. 5,
- Fig. 7: eine Ausschnittsvergrößerung des zentralen Teiles der Dachkinematik gemäß Fig. 6,
- Fig. 8: eine der Ablagestellung des Daches gemäß Fig. 4 entsprechende Darstellung der um die Kinematik für die Heckscheibe und die Hutablage ergänzten Kinematik, wobei die Hutablage ihre angehobene Öffnungslage zur Überführung des Daches in seine Ablagestellung im Heck des Fahrzeuges einnimmt,
- Fig. 9: eine vergrößerte Darstellung des zentralen Teiles der Kinematik in einer der Fig. 8 entsprechenden Darstellung,
- Fig. 10: in einer der Schließlage des Daches gemäß Fig. 4 entsprechenden Darstellung die um die Kinematik für Heckscheibe und Hutablage ergänzte Dachkinematik, wobei die Hutablage ihre den Ablageraum für das Dach zumindest teilweise überdeckende Stellung einnimmt und die Heckscheibe, wie schon in den Darstellungen gemäß Fig. 8 ff. ihre gegenüber dem unter das Mittelteil eingeklappten Heckteil gegen das Mittelteil angehobene Stellung einnimmt, und
- Fig. 11: wiederum eine vergrößerte Darstellung des zentralen Bereiches der Kinematik.

Das beispielsweise und schematisiert dargestellte, als dreiteiliges Hardtop ausgebildete Dach erstreckt sich geschlossen zwischen Heckdeckel und Windlauf des Fahrzeuges und ist geöffnet in einer heckseitigen Ablage zu verstauen.

Die zugehörige Dachkinematik ist zur Fahrzeuglängsmittelebene symmetrisch aufgebaut und mit den Dachteilen 1 - 3, die in den Zeichnungen durch ihre Trägerteile symbolisiert sind, verbunden.

In der Offenstellung des Daches, also bei abgelegtem Dach, ist das Vorderteil 1 unter Beibehalt seiner Ausrichtung über das Mittelteil 2 geschwenkt und das Heckteil 3 liegt in Rückenlage unterhalb des Mittelteiles 2.

Das Heckteil 3 ist in seinem Längsmittelbereich durch eine Heckscheibe 40 gebildet, die gegenüber den seitlichen C-Säulen bei in Ablagestellung befindlichem Heckteil 3 in Richtung auf das Mittelteil 2 verstellbar ist.

Die Dachkinematik ist, bezogen auf die Längserstreckung des Fahrzeuges, über längsseitliche, lagefeste Konsolen 5 getragen und erstreckt sich ausgehend von den Konsolen 5 in Schließstellung des Daches im Wesentlichen längs der Dachteile 1 - 3. Grundsätzlich liegt es auch im Rahmen der Erfindung, die Konsolen 5 selbst in bekannter Weise zur Karosserie verstellbar zu machen, sodass sich weitere Übergangsstellungen realisieren lassen, so beispielsweise eine zur Ablagestellung durch Verstellen der Konsole 5 angehobene Beladestellung.

Im Einzelnen umfasst die Dachkinematik, jeweils bezogen auf eine Fahrzeuglängsseite, einen dem Heckteil 3 zugeordneten C-Säulenlenker 6 als Bestandteil eines ersten Viergelenks. Der C-Säulenlenker ist mit der Konsole 5 über einen Zwischenlenker 9 in Anlenkpunkten 7 und 8 verbunden. Angelenkt an der Konsole 5 in einem Anlenkpunkt 10 ist ferner ein Hauptlenker 11 als vorderer Lenker des ersten Viergelenkes. Der C-Säulenlenker 6 ist, bezogen auf das geschlossene Dach, im rückwärtigen Endbereich des Mittelteiles 2 mit diesem im Anlenkpunkt 12 verbunden, der Anlenkpunkt 13 des Hauptlenkers 11 ist in Fahrtrichtung F versetzt am Mittelteil 2 vorgesehen.

Nahe dem Anlenkpunkt 13 und entgegen der Fahrtrichtung F versetzt ist am Hauptlenker 11 in einen Anlenkpunkt 14 ein Stelllenker 15 - als Bestandteil eines dritten Viergelenkes - angelenkt, der über ein Vorgelege 16 das Vorderteil 1 beaufschlagt, das über Lenker 17 und 18 - als Bestandteile eines zweiten Viergelenkes - mit dem Mittelteil 2 verbunden ist. Der Lenker 17 ist in einem frontseitigen Anlenkpunkt 19 und der Lenker 18 in einem rückwärtigen Anlenkpunkt 20 am Vorderteil 1 angelenkt. Die Anlenkpunkte am Mittelteil 2 sind für den Lenker 17 mit 21 und für den Lenker 18 mit 22 bezeichnet, wobei der Anlenkpunkt 21 in Fahrtrichtung F vor dem Anlenkpunkt 22 und höhenversetzt zu diesem liegt. Bevorzugt liegt der Anlenkpunkt 22 nahe der oberen Begrenzung des Mittelteils 2, insbesondere in einer nach oben gerichteten Ausformung desselben.

Das als Vorgelege 16 vorgesehene Fünfgelenk umfasst einen am Mittelteil 2 im Anlenkpunkt 23 - benachbart zum Anlenkpunkt 22 des Lenkers 18 - angelenkten Führungslenker 24, der zum Stelllenker 15 einen bezogen auf das geschlossene Dach schräg nach hinten unten versetzten Anlenkpunkt 81 aufweist und zu dem überkreuzend ein Anschlusslenker 25 vorgesehen ist, der zum Stelllenker 15 einen Anlenkpunkt 26 und zum im Anlenkpunkt 22 mit dem Mittelteil 2 verbundenen Lenker 18 einen Anlenkpunkt 27 aufweist.

Das Heckteil 3 ist bezüglich seines in Verbindung zur karosseriefesten Konsole 5 liegenden Anlenkpunktes 7 lageveränderlich, und durch die Verschwenkung des Zwischenlenkers 9 ist der C-Säulenlenker 6 in Längsrichtung des Fahrzeuges bei Verschwenkung des Daches zwischen Schließ- und Öffnungsstellung verlagerbar, sodass sich für das Dach bei der Ablage und bei der Überführung in die Ablagestellung ein in Fahrzeuglängsrichtung verringerter Raumbedarf erreichen lässt. Gesteuert ist der Zwischenlenker 9 in seiner Schwenkbewegung um seinen der Konsole 5 zugeordneten Anlenkpunkt 8 über einen Steuerlenker 28, der in einem Anlenkpunkt 29 am Hauptlenker 11 angelenkt ist.

Auf den Hauptlenker 11 wirkt der Verstellantrieb für die Dachkinematik, der durch einen gegen die Konsole 5 abgestützten Linearantrieb in Form eines Stellzylinders 31 gebildet ist, der einen Umlenker 32 beaufschlagt und in einem Anlenkpunkt 33 mit dem Umlenker 32 verbunden ist. Der Umlenker 32 ist über eine Viergelenkführung mit der Konsole 5 verbunden, die Lenker 34 und 35 unterschiedlicher Länge umfasst, von denen der längere Lenker 34 in einem Anlenkpunkt 36 und der kürzere Lenker 35 im Anlenkpunkt 10 des Hauptlenkers 11 mit der Konsole 5 verbunden ist. Anstelle einer zusammenfallenden Anlenkung zur Konsole 5 in einem Anlenkpunkt 10 können der Lenker 35 und der Hauptlenker 11 auch in separaten Anlenkpunkten an der Konsole 5 angelenkt sein.

Der Umlenker 32 weist des Weiteren einen Anlenkpunkt 37 zu einem Stelllenker 38 auf, der in einem Anlenkpunkt 39 mit dem Hauptlenker 11 verbunden ist, sodass die über den Umlenker 32 führende Antriebsverbindung des Stellzylinders 31 zum Hauptlenker 11 geschlossen ist. Verstellbewegungen des Stellzylinders 31 führen somit zu Schwenkbewegungen des Hauptlenkers 11 und ausgehend vom Hauptlenker 11 über den Steuerlenker 28 zur Verschwenkung des Zwischenlenkers 9 und damit zu Verlagerungen des über den Zwischenlenkern 9 mit der Konsole 5 verbundenen Anlenkpunktes 7 des C-Säulenlenkers 6. Von den Anlenkungen der Lenker 34 und 35 am Umlenker 32 fällt die des längeren, in der Verbindung zur Konsole 5 liegenden Lenkers 34 mit dem Anlenkpunkt 33 des Stellzylinders 31 zusammen, während der Umlenker 32 in einem Anlenkpunkt 80 mit dem Lenker 35 verbunden ist. Die Anlenkpunkte 33, 37 und 80 liegen nahezu in den Eckpunkten eines gleichseitigen Dreiecks, wobei die Anlenkpunkte 33 und 37 bei geschlossenem Dach nahezu in Stellrichtung des Stellzylinders 31 hintereinander und in Flucht zum Stellzylinder 31 liegen, wodurch sich günstige Kraftübertragungsverhältnisse auch in der Übertragung der Stellkräfte auf dem Hauptlenker 11 ergeben.

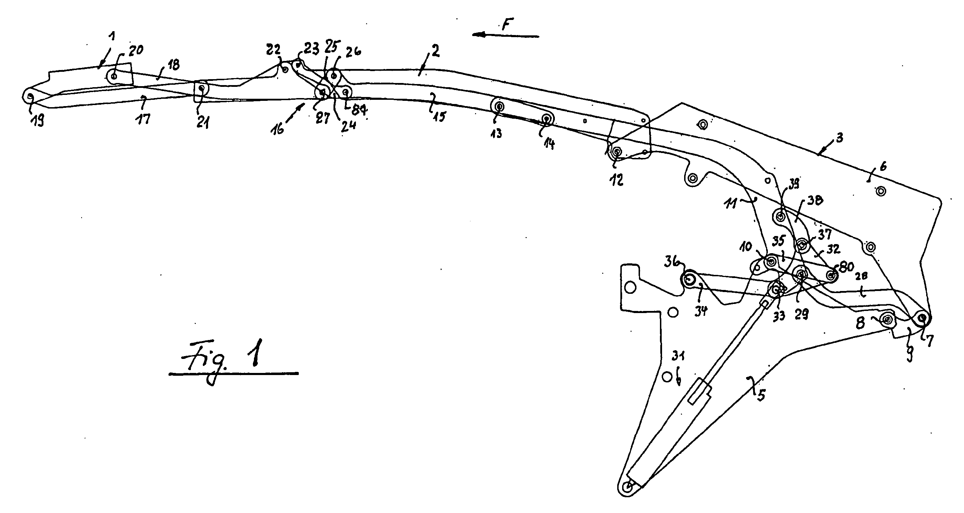

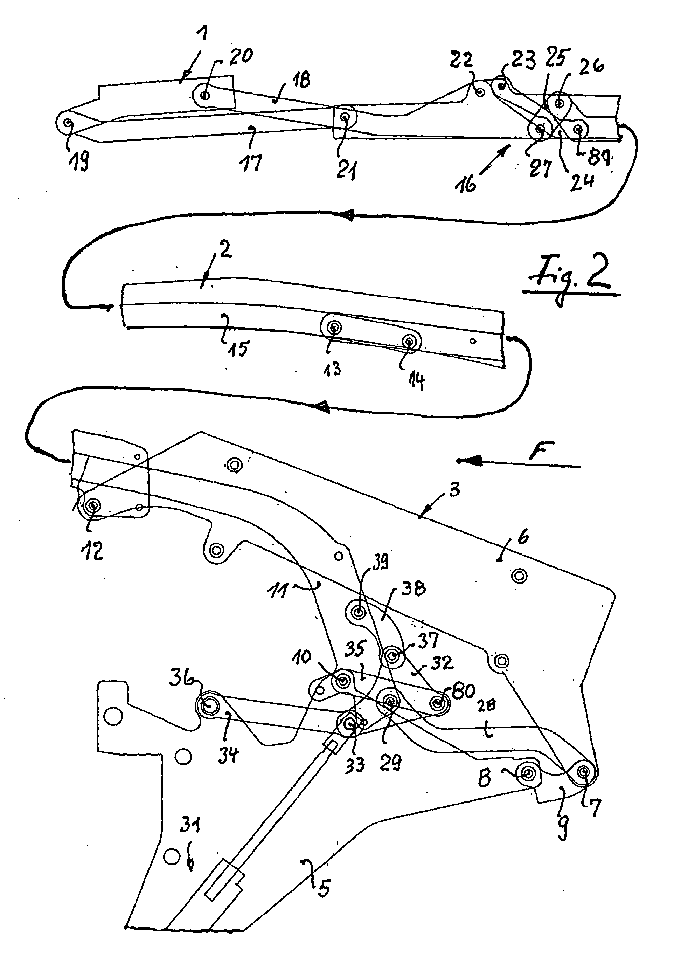

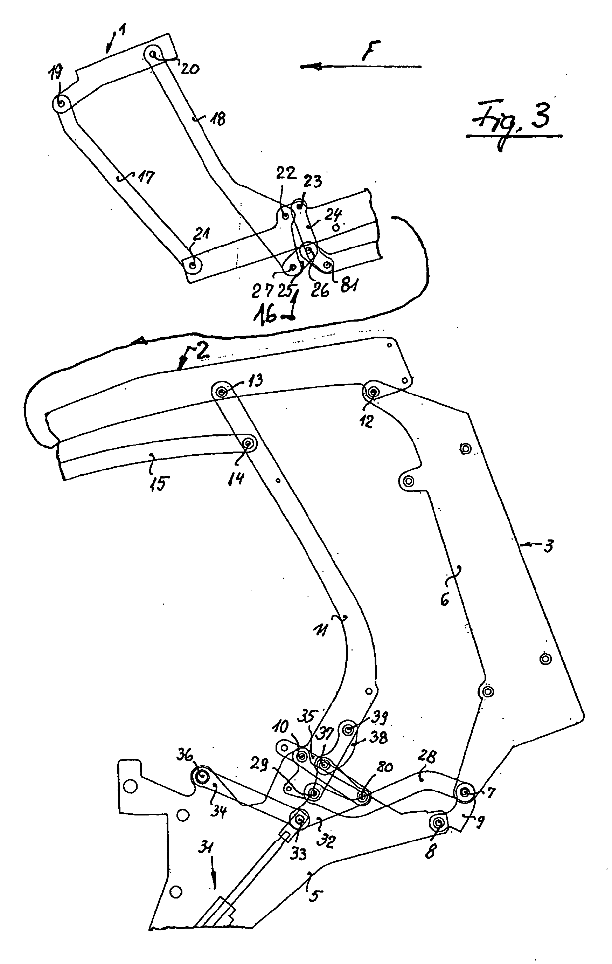

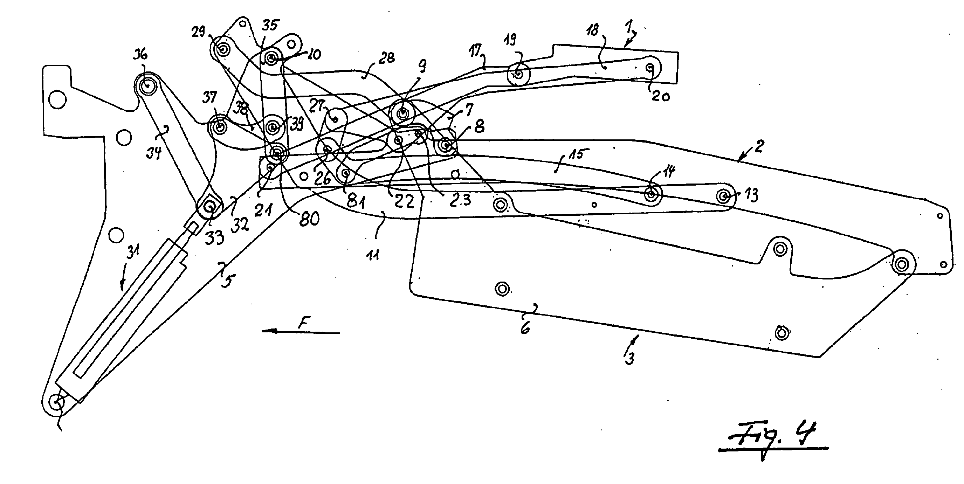

Die Bewegungsabläufe bei der Umstellung des Daches sind, entsprechend den Erläuterungen in der Figurenlegende, aus den Zeichnungen, Fig. 1 bis 4 ersichtlich, in denen entsprechende Bezugszeichen zur Erläuterung eingetragen sind. Die geschilderte Dachkinematik arbeitet insgesamt raumsparend, weiter auch mit günstigen Übersetzungsverhältnissen und damit kraftsparend, und zeigt einen einfachen Lenkeraufbau.

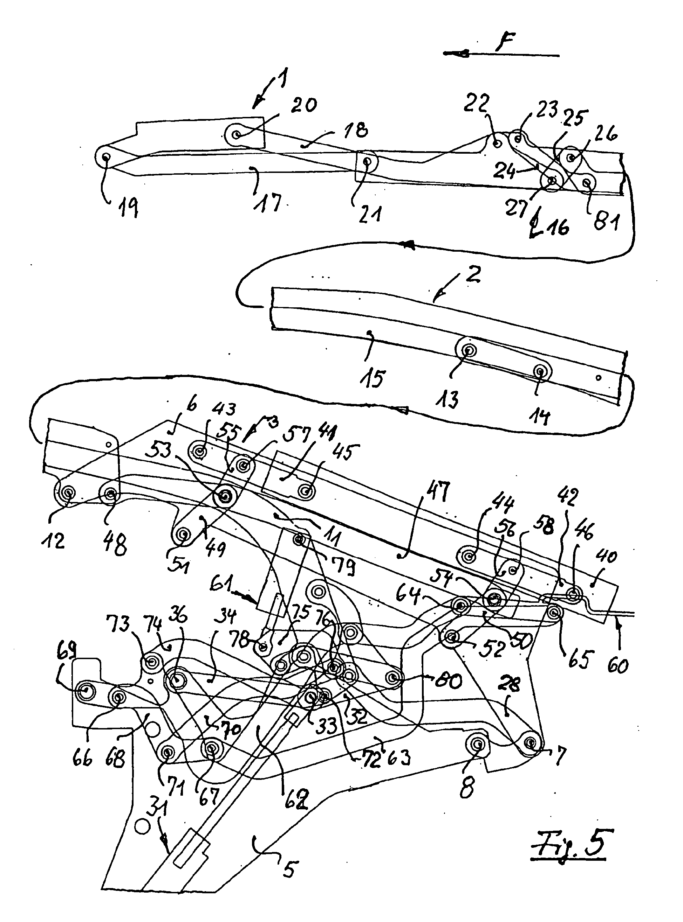

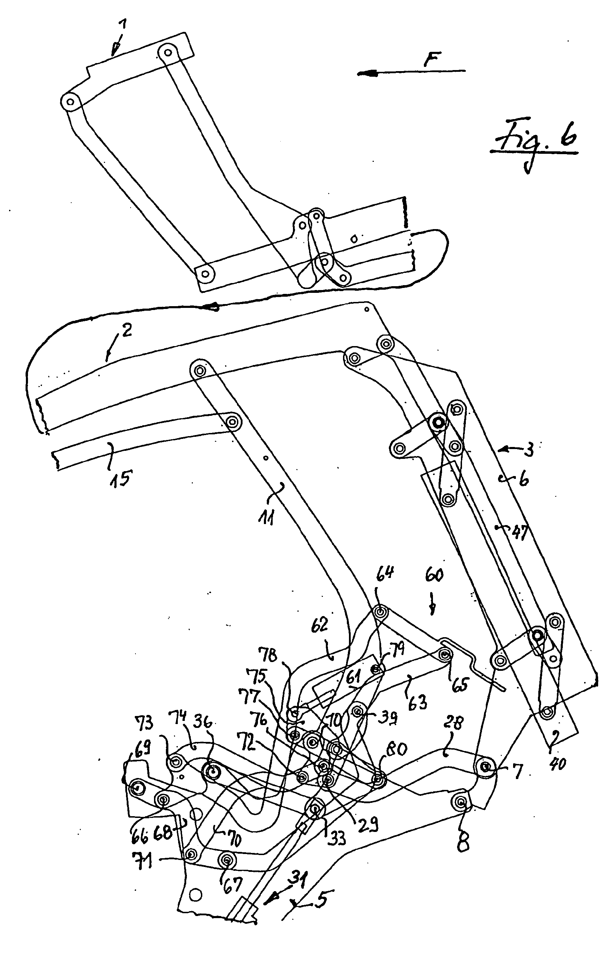

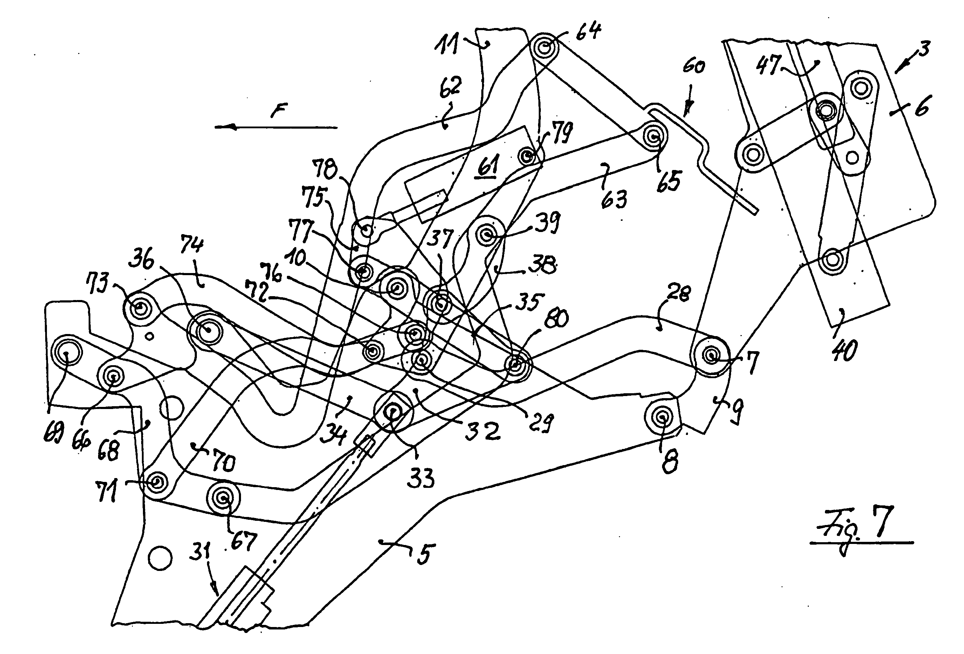

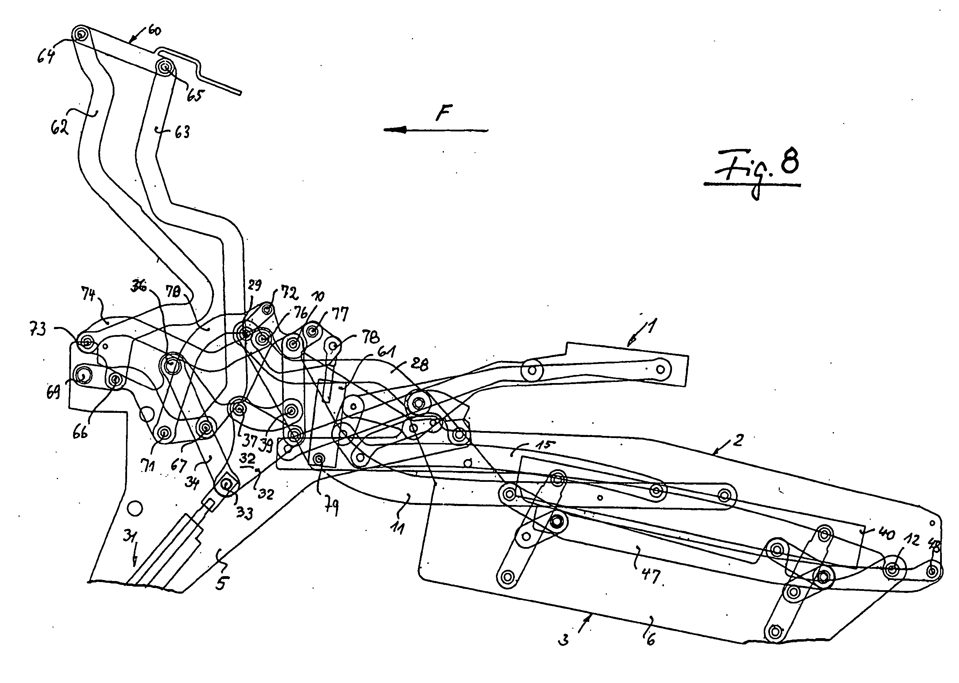

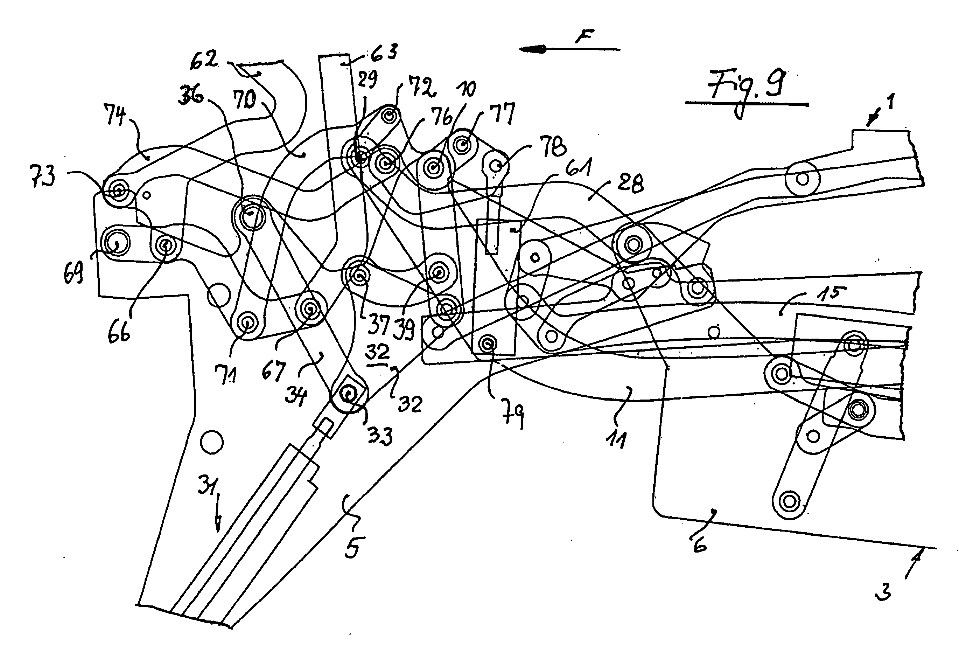

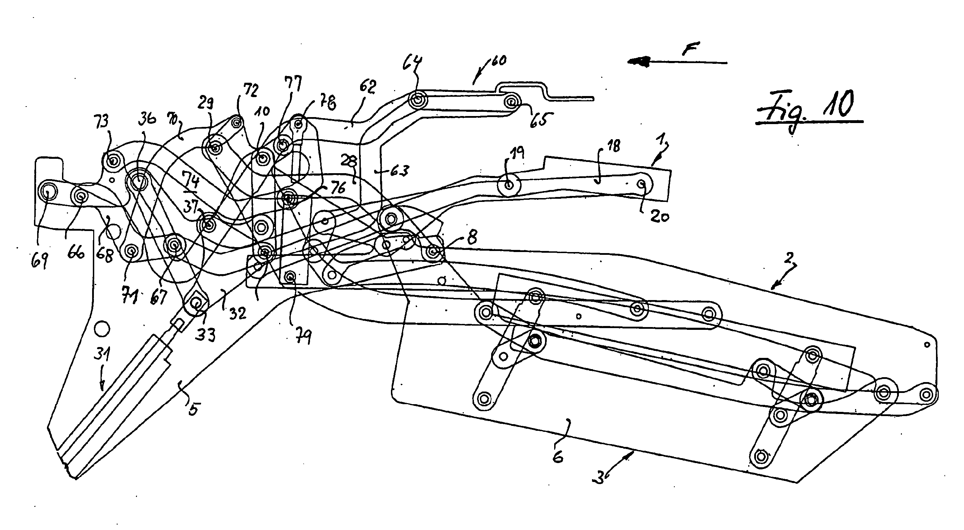

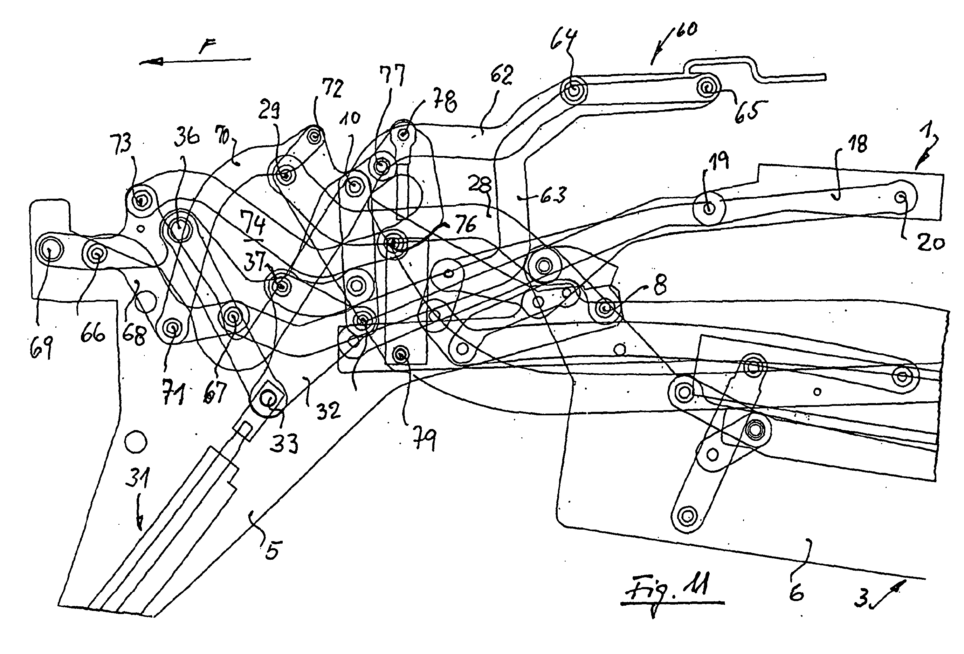

In Fig. 5 und 6 ist die in Verbindung mit der Verlagerung des Daches zwischen Öffnungs- und Schließstellung erfolgende Verstellung der Heckscheibe veranschaulicht, wobei die Heckscheibe lediglich schematisch bei 40 angedeutet ist; ferner ist insbesondere in den nachfolgenden Fig. 7 bis 11 eine Hutablage 60 veranschaulicht mit der zugehörigen Kinematik, über die die Hutablage 60 synchron zur Dachkinematik und dem Dach, ergänzend aber auch gegenüber der Dachkinematik und dem Dach in der Ablagestellung des Dach zu verstellen ist.

Die Heckscheibe 40 ist gegenüber dem jeweiligen C-Säulenlenker 6 über eine Viergelenkanordnung geführt, die als Parallelogrammlenkeranordnung zwei Lenker 41 und 42 aufweist, welche Anlenkpunkte 43 und 44 zum C-Säulenlenker 6 und Anlenkpunkte 45 und 46 zur Heckscheibe 40 bzw. deren Rahmen aufweisen. Die Lenker 41 und 42 erstrecken sich bei geschlossenem Dach im Wesentlichen gleichgerichtet in Längsrichtung des C-Säulenlenkers 6. Eine entsprechende Erstreckung ist für einen Antriebslenker 47 gegeben, der mit dem Mittelteil 2 in einem Anlenkpunkt 48 verbunden ist, der in Längsrichtung des Mittelteiles 2 entgegen der Fahrtrichtung F versetzt zum Anlenkpunkt 12 zwischen C-Säulenlenker 6 und Mittelteil 2 vorgesehen ist. Der Antriebslenker 47 ist gegenüber dem C-Säulenlenker 6 über eine Viergelenkanordnung geführt, die Lenker 49 und 50 umfasst, welche Anlenkpunkte 51, 52 zum C-Säulenlenker 6 aufweisen. Ferner haben die Lenker 49, 50 Anlenkpunkte 53, 54 zum Antriebslenker 47 und es sind mit dem Antriebslenker 47 des Weiteren auch Übertragungslenker 55, 56 schwenkbar verbunden, die ihrerseits in Anlenkpunkten 57, 58 an den mit der Heckscheibe 40 verbundenen Lenkern 41, 42 angreifen. Die Übertragungslenker 55, 56 sind in Anlenkpunkten mit dem Antriebslenker 47 verbunden, die zur Verringerung des baulichen Aufwandes bevorzugt mit den Anlenkpunkten 53 und 54 der Lenker 49, 50 zusammenfallen.

Bei der Verstellung des Daches zwischen Öffnungs- und Schließlage und damit verbundener Verschwenkung der Dachteile gegeneinander führt die Lageveränderung zwischen C-Säulenlenker 6 und Mittelteil 2, wie die Zeichnungen gemäß Fig. 5 und 6 zeigen, zu einer Längsverschiebung des Antriebslenkers 47 gegenüber dem C-Säulenlenker 6, und damit zu einer Verlagerung der dem Antriebslenker 47 zugeordneten Anlenkpunkte 53, 54 der Übertragungslenker 55, 56, durch die, beim Öffnen des Daches, die Lenker 41, 42 aus ihrer zum C-Säulenlenker 6 im Wesentlichen gleichgerichteten Erstreckungslage in eine Querlage verschwenkt werden, mit dem Effekt, dass die Heckscheibe 40 gegenüber dem C-Säulenlenker 6 rückseitig abgehoben wird. Dies führt in der Ablagestellung mit in Rückenlage befindlichen Heckteil 3 zu einer Verlagerung der Heckscheibe 40 in Richtung auf das darüber liegende Mittelteil 2 mit einem entsprechenden, verringerten Raumbedarf für das Dach in dessen Ablagestellung.

In den Fig. 5 bis 11 ist weiter die bei geschlossenem Dach im hinteren Bereich des Heckteiles 3 untergreifend zu diesem vorgesehene Hutablage 60 veranschaulicht, deren Verstellung, teils synchron zur Dachverstellung, über eine mit der Dachkinematik verbundene Hutablagekinematik erfolgt, wobei die Hutablagenkinematik zur Verstellung der Hutablage gegenüber dem abgelegten Dach einen zusätzlichen Stellantrieb 61 umfasst.

Die Hutablage 60 bildet die Koppel eines Viergelenks, dessen Lenker 62 und 63 mit der Hutablage 60 in Anlenkpunkten 64 und 65 verbunden sind und des Weiteren Anlenkpunkte 66 und 67 zu einem Basislenker 68 aufweisen, der seinerseits einen Anlenkpunkt 69 zur Konsole 5 hat. Der Basislenker 68 ist seinerseits über einen Antriebslenker 70 mit dem Hauptlenker 11 verbunden. Der Antriebslenker 70 weist zum Basislenker 68 einen Anlenkpunkt 71 und zum Hauptlenker 11 einen Anlenkpunkt 72 auf. Ferner ist der Basislenker 68 über einen Abschnitt des zur Hutablage 60 als Koppel führenden Lenkers 62, benachbart zu dessen Anlenkpunkt 66 am Basislenker 68, in einem Anlenkpunkt 73 mit einem Brückenlenker 74 verbunden, der in der Verbindung zum zusätzlichen Stellantrieb 61 liegt und der zu einem Umlenker 75 einen Anlenkpunkt 76 aufweist. Der Umlenker 75 weist einen Anlenkpunkt 77 zum Hauptlenker 11 auf und des Weiteren auch einen Anlenkpunkt 78 zum Stellantrieb 61 in Form eines Stellzylinders, der seinerseits in einem Anlenkpunkt 79 am Hauptlenker 11 angelenkt ist. Bei gleichbleibender Stellung des Stellantriebs 61 ist damit der Anlenkpunkt 76 des Brückenlenkers 74 zum Umlenker 75 und zum Hauptlenker 11 lagefest und es ist der Basislenker 68 kinematisch über die den Antriebslenker 70 und den Brückenlenker 74 umfassende Lenkerkette mit dem Hauptlenker 11 verkoppelt.

Dadurch wird bei der Ablagebewegung des Daches in die Ablagestellung, wie die Zeichnungen gemäß Fig. 5 bis 11 zeigen, die Hutablage 60, gekoppelt an die Bewegung des Daches, zunächst bis in eine Lage verschwenkt, die der den Zugang zum Ablageraum des Daches freigebenden Ausgangs- oder Grenzlage entspricht, wenn das Dach aus seiner Ablagestellung in seine Schließstellung überführt wird.

Die Hutablage wird also beim Öffnen und Schließen des Daches, bis zur angesprochenen Grenzstellung beim Öffnen und ausgehend von dieser Grenzstellung beim Schließen des Daches, über die Kopplung zur Dachkinematik verstellt. Die angegebene Grenzstellung der Hutablage entspricht einer Lage, in der die Hutablage keine Behinderung für den Durchgang des Daches mehr darstellt. Innerhalb des Verstellbereiches der Hutablage zwischen der jeweiligen Betriebslage - bei geöffnetem oder bei abgelegtem Dach - und der den Durchgang des Daches ermöglichenden Grenzstellung erfolgt die Verstellung der Hutablage - bei in Ablagestellung befindlichem Dach, durch den separaten Stellantrieb 61 für die Hutablage 60, der nur der Verstellung der Hutablage 60 dient, damit auf verhältnismäßig kleine Verstellbereiche ausgelegt sein kann und dem entsprechend auch keinen hohen Anforderungen ausgesetzt ist.

## Patentansprüche

1. Mehrteiliges Dach für Fahrzeuge mit offenem Aufbau, bei dem das Dach zumindest einen Heckteil (3) und einen davor liegenden Dachteil umfasst, zwischen einer Schließstellung und einer Ablagestellung über eine Dachkinematik verstellbar ist und eine mit der Dachkinematik über eine Lenkerkinematik verbundene Hutablage (60) aufweist, die zwischen einer Abdecklage zu einem Ablageraum für das in Ablagestellung befindliche, geöffnete Dach und einer den Zugang zum Ablageraum freigebenden Öffnungsstellung in Abhängigkeit von der Verstellung der Dachkinematik verstellbar ist, wobei die Lenkerkinematik einen zur Karosserie verschwenkbaren Lenker aufweist, der durch eine Antriebsverbindung zur Dachkinematik in Abhängigkeit von der Verstellung des Daches verstellbar ist, wobei die Antriebsverbindung einen an einem angetriebenen Hauptlenker (11) der mit der Karosserie verbundenen Dachkinematik angelenkten Antriebslenker (70) umfasst,
**dadurch gekennzeichnet,**
**dass** die Lenkerkinematik als Viergelenkanordnung mit der Hutablage (60) als Koppel ausgebildet ist, dass der zur Karosserie verschwenkbare Lenker der Lenkerkinematik den Basislenker (68) der Viergelenkanordnung bildet, dass mit dem Basislenker (68) der Viergelenkanordnung der am Hauptlenker (11) angelenkte Antriebslenker (70) antriebsverbunden ist und dass die Hutablage (60) aus ihrer zur Ablagestellung des Daches korrespondierenden Öffnungsstellung über einen gegen den Hauptlenker (11) der Dachkinematik abgestützten Stellantrieb (61) für die Hutablage (60) in eine der Ablagestellung des Daches entsprechende Betriebsstellung umstellbar ist, und umgekehrt.

2. Mehrteiliges Dach nach Anspruch 1,
**dadurch gekennzeichnet,**
**dass** in der Ablagestellung des Daches bei zur Dachkinematik feststehendem Basislenker (68) die Lenkerkinematik der Hutablage über den gegen den Hauptlenker (11) abgestützten Stellantrieb (61) verstellbar ist.

3. Mehrteiliges Dach nach Anspruch 1 oder 2,
**dadurch gekennzeichnet,**
**dass** ein am Basislenker (68) angelenkter Lenker (62) der Lenkerkinematik der Hutablage (60) über einen Brückenlenker (74) mit dem Hauptlenker (11) der Dachkinematik in einem Anlenkpunkt (76) verbunden ist, der zum Hauptlenker (11) lagefest fixierbar sowie auch verstellbar ist.

4. Mehrteiliges Dach nach Anspruch 3,
**dadurch gekennzeichnet,**
**dass** der lagefest fixierbare sowie auch verstellbare Anlenkpunkt (76) des Brückenlenkers (74) einem zum Hauptlenker (11) der Dachkinematik über den Stellantrieb (61) verstellbaren sowie auch fixierbaren Umlenker (75) zugeordnet ist.

5. Mehrteiliges Dach nach Anspruch 4,
**dadurch gekennzeichnet,**
**dass** der Umlenker (75) über den Stellantrieb (61) zum Hauptlenker der Dachkinematik über dem Verstellbereich des Daches zwischen Schließ- und Öffnungsstellung lagefest fixiert ist.

## Claims

1. Multipart roof for vehicles of open construction, in which the roof comprises at least one rear part (3) and a roof part located in front, which may be adjusted between a closed position and a storage position via a roof kinematic system and which comprises a parcel shelf (60) connected to the roof kinematic system via a rod kinematic system, which may be adjusted between a covered position relative to a storage compartment for the open roof located in the storage position, and an open position allowing access to the storage compartment depending on the adjustment of the roof kinematic system, the rod kinematic system comprising a link which may be pivoted relative to the bodywork, which may be adjusted by a driving connection relative to the roof kinematic system depending on the adjustment of the roof, the driving connection comprising a driving link (70) articulated to a driven main link (11) of the roof kinematic system connected to the bodywork,
**characterized in that**
the rod kinematic system is configured as a four link arrangement with the parcel shelf (60) as a coupler link, **in that** the link of the rod kinematic system which may be pivoted relative to the bodywork forms the basic link (68) of the four link arrangement, **in that** the driving link (70) articulated to the main link (11) is operatively connected to the basic link (68) of the four link arrangement and **in that** the parcel shelf (60) may be repositioned from its open position corresponding to the storage position of the roof via an actuator (61) for the parcel shelf (60) supported against the main link (11) of the roof kinematic system into an operating position corresponding to the storage position of the roof and vice versa.

2. Multipart roof according to Claim 1, **characterized in that** in the storage position of the roof when the basic link (68) is fixed to the roof kinematic system, the rod kinematic system of the parcel shelf may be adjusted via the actuator (61) supported against the main link (11).

3. Multipart roof according to Claim 1 or 2, **characterized in that** a link (62) of the link kinematic system of the parcel shelf (60) articulated to the basic link (68) is connected to the main link (11) of the roof kinematic system via a bridging link (74) at a point of articulation (76) which may be fixedly fixed to the main link (11) and is also adjustable.

4. Multipart roof according to Claim 3, **characterized in that** the point of articulation (76) of the bridging link (74) which may be fixedly fixed and which is also adjustable, is associated with a deflector (75) which is adjustable via the actuator (61) and also which may be fixed relative to the main link (11) of the roof kinematic system.

5. Multipart roof according to Claim 4, **characterized in that** the deflector (75) is fixedly fixed via the actuator (61) relative to the main link of the roof kinematic system via the adjusting region of the roof between the closed and open position.

## Revendications

1. Toit en plusieurs parties pour des véhicules dotés d'une structure ouverte, dans lequel le toit comprend au moins une partie arrière (3) et une partie de toit située avant celle-ci, peut être déplacé par un mécanisme de toit entre une position de fermeture et une position de rangement et comprend une plage arrière (60) reliée au mécanisme de toit au moyen d'un mécanisme de leviers, qui peut être déplacée entre une position de recouvrement d'un espace de rangement pour le toit ouvert se trouvant dans la position de rangement et une position d'ouverture libérant l'accès à l'espace de rangement, dans lequel le mécanisme de leviers comprend un levier pivotant par rapport à la carrosserie, qui peut être déplacé par une liaison d'entraînement avec le mécanisme de toit en fonction du déplacement du toit, dans lequel la liaison d'entraînement comprend un levier d'entraînement (70) articulé à un levier principal commandé (11) du mécanisme de toit relié à la carrosserie, **caractérisé en ce que** le mécanisme de leviers est réalisé par un dispositif à quatre articulations avec la plage arrière (60) comme couplage, **en ce que** le levier du mécanisme de leviers pivotant par rapport à la carrosserie forme le levier de base (68), du dispositif à quatre articulations, **en ce que** le levier d'entraînement (70) articulé au levier principal (11) est en liaison d'entraînement avec le levier de base (68) du dispositif à quatre articulations et **en ce que** la plage arrière (60) peut être déplacée de sa position d'ouverture correspondante pour la position de rangement du toit à une position de service correspondant à la position de rangement du toit, au moyen d'un mécanisme de commande (61) pour la plage arrière (60) appuyé contre le levier principal (11) du mécanisme de toit, et inversement.

2. Toit en plusieurs parties selon la revendication 1, **caractérisé en ce que** dans la position de rangement du toit, le mécanisme de leviers de la plage arrière peut être déplacé par le mécanisme de commande (61) appuyé contre le levier principal (11) lorsque le levier de base (68) est immobilisé par rapport au mécanisme de toit.

3. Toit en plusieurs parties selon la revendication 1 ou 2, **caractérisé en ce qu'**un levier (62) du mécanisme de leviers de la plage arrière (60), articulé au levier de base (68), est relié par un levier de pont (74) au levier principal (11) du mécanisme de toit en un point d'articulation (76), qui peut être immobile mais aussi déplaçable par rapport au levier principal (11).

4. Toit en plusieurs parties selon la revendication 3, **caractérisé en ce que** le point d'articulation (76) du levier de pont (74), qui peut être immobilisé mais aussi déplaçable, est associé à un levier de renvoi (75) pouvant être déplacé mais aussi immobilisé par rapport au levier principal (11) du mécanisme de toit au moyen du mécanisme de commande (61) .

5. Toit en plusieurs parties selon la revendication 4, **caractérisé en ce que** le levier de renvoi (75) est immobilisé au moyen du mécanisme de commande (61) par rapport au levier principal (11) du mécanisme de toit sur la plage de déplacement du toit entre la position de fermeture et la position d'ouverture.
